(19) Europäisches Patentamt / European Patent Office / Office européen des brevets

(11) **EP 4 564 820 A1**

(12) **EUROPEAN PATENT APPLICATION**
published in accordance with Art. 153(4) EPC

(43) Date of publication:
**04.06.2025 Bulletin 2025/23**

(21) Application number: **23846975.3**

(22) Date of filing: **25.07.2023**

(51) International Patent Classification (IPC):
*H04N 19/593* (2014.01)    *H04N 19/11* (2014.01)
*H04N 19/176* (2014.01)    *H04N 19/132* (2014.01)
*H04N 19/186* (2014.01)

(52) Cooperative Patent Classification (CPC):
**H04N 19/11; H04N 19/132; H04N 19/176;
H04N 19/186; H04N 19/593**

(86) International application number:
**PCT/KR2023/010774**

(87) International publication number:
**WO 2024/025317 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.07.2022 KR 20220091654**

(71) Applicant: **LG Electronics Inc.
Yeongdeungpo-gu
Seoul 07336 (KR)**

(72) Inventors:
• **YOO, Sunmi**
  **Seoul 06772 (KR)**
• **NAM, Junghak**
  **Seoul 06772 (KR)**
• **CHOI, Jangwon**
  **Seoul 06772 (KR)**
• **HONG, Myungoh**
  **Seoul 06772 (KR)**

(74) Representative: **Maikowski & Ninnemann
Patentanwälte Partnerschaft mbB
Postfach 15 09 20
10671 Berlin (DE)**

(54) **IMAGE ENCODING/DECODING METHOD AND DEVICE, AND RECORDING MEDIUM HAVING BITSTREAM STORED THEREON**

(57)    An image decoding/encoding method and device according to the present disclosure may construct a reference sample for linear model prediction of a current block based on reconstructed neighboring samples of the current block, derive a linear model of the current block based on the reference sample, generate a prediction sample of the current block based on the linear model, and decode/encode the current block based on the prediction sample of the current block.

FIG.4

```
CONSTRUCT REFERENCE SAMPLE          — S400
              ↓
DERIVE LINEAR MODEL PARAMETERS      — S410
              ↓
GENERATE PREDICTION SAMPLES         — S420
```

EP 4 564 820 A1

**Description**

[Technical Field]

The present disclosure relates to an image encoding/decoding method and device, and a recording medium having a bitstream stored thereon.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure provides a method and device for deriving a linear model based on neighboring reconstructed samples and performing intra prediction using the derived linear model.

The present disclosure provides a method and device for constructing a reference sample for deriving a linear model.

The present disclosure provides a method and device for designing various linear models to improve the accuracy of prediction.

The present disclosure provides an effective signaling method and device for linear model intra prediction.

The present disclosure provides a method and device for selecting/deriving a linear model based on template matching.

[Technical Solution]

An image decoding method and device according to the present disclosure may construct a reference sample for linear model prediction of a current block based on reconstructed neighboring samples of the current block, derive a linear model of the current block based on the reference sample, and generate a prediction sample of the current block based on the linear model.

In the image decoding method and device according to the present disclosure, the linear model of the current block may be derived using coordinate information of the reference sample and a value of the reference sample.

In the image decoding method and device according to the present disclosure, the reference sample may include at least one of reference samples included in a left sample line adjacent to the current block, reference samples included in an upper sample line adjacent to the current block, or upper-left reference samples adjacent to the current block.

The image decoding method and device according to the present disclosure may derive a horizontal component parameter and a vertical component parameter of the linear model using the coordinate information of the reference sample and the value of the reference sample.

In the image decoding method and device according to the present disclosure, the horizontal component parameter or the vertical component parameter may be set to 0.

The image decoding method and device according to the present disclosure may apply a predetermined weight to the horizontal component parameter or the vertical component parameter.

In the image decoding method and device according to the present disclosure, a first flag indicating whether the linear model prediction is applied to the current block may be obtained.

In the image decoding method and device according to the present disclosure, a second flag indicating whether directional linear model prediction is applied to the current block may be obtained when the first flag indicates that the linear model prediction is applied to the current block.

In the image decoding method and device according to the present disclosure, a third flag indicating whether horizontal linear model prediction or vertical linear model prediction is applied to the current block may be obtained when the second flag indicates that the directional linear model prediction is applied to the current block.

The image decoding method and device according to the present disclosure may determine a linear model to be applied to the current block from among a plurality of linear models based on template matching.

An image encoding method and device according to the present disclosure may construct a reference sample for linear model prediction of a current block based on reconstructed neighboring samples of the current block, derive a linear model of the current block based on the reference sample, and generate a prediction sample of the current block based on the linear model.

In the image encoding method and device according to the present disclosure, the linear model of the current block may be derived using coordinate information of the reference sample and a value of the reference sample.

In the image encoding method and device according to the present disclosure, the reference sample may include at least one of reference samples included in a left sample line adjacent to the current block, reference samples included in an upper sample line adjacent to the current block, or upper-left reference samples adjacent to the current block.

The image encoding method and device according to the present disclosure may derive a horizontal component parameter and a vertical component parameter of the linear model using the coordinate information of the reference sample and the value of the reference sample.

In the image encoding method and device according to the present disclosure the horizontal component parameter or the vertical component parameter may be set to 0.

The image encoding method and device according to the present disclosure may apply a predetermined weight to the horizontal component parameter or the vertical component parameter.

In the image encoding method and device according to the present disclosure, a first flag indicating whether the linear model prediction is applied to the current block may be obtained.

In the image encoding method and device according to the present disclosure, a second flag indicating whether directional linear model prediction is applied to the current block may be obtained when the first flag indicates that the linear model prediction is applied to the current block.

In the image encoding method and device according to the present disclosure, a third flag indicating whether horizontal linear model prediction or vertical linear model prediction is applied to the current block may be obtained when the second flag indicates that the directional linear model prediction is applied to the current block.

The image encoding method and device according to the present disclosure may determine a linear model to be applied to the current block from among a plurality of linear models based on template matching.

There is provided a computer-readable digital storage medium in which encoded video/image information that causes a decoding device according to the present disclosure to perform an image decoding method is stored.

There is provided a computer-readable digital storage medium in which video/image information generated according to an image encoding method according to the present disclosure is stored.

There is provided a method and device for transmitting video/image information generated according to an image encoding method according to the present disclosure.

[Advantageous Effects]

According to the present disclosure, by inducing a linear model based on neighboring reconstructed samples and performing intra prediction using the derived linear model, it is possible to consider more various prediction methods for prediction and improve compression performance.

According to the present disclosure, by providing various linear model design methods and devices, it is possible to increase the accuracy of prediction.

The present disclosure can improve the accuracy of prediction by providing a design method and device for various linear models.

The present disclosure can improve the compression efficiency by effectively signaling information about linear model intra prediction.

The present disclosure can reduce the signaling overhead and improve the compression efficiency by selecting/deriving a linear model based on template matching.

[Description of Drawings]

FIG. 1 is a video/image coding system according to the present disclosure.

FIG. 2 is a rough block diagram of an encoding apparatus to which an embodiment of the present disclosure may be applied and encoding of a video/image signal is performed.

FIG. 3 is a rough block diagram of a decoding apparatus to which an embodiment of the present disclosure may be applied and decoding of a video/image signal is performed.

FIG. 4 is a diagram illustrating an intra prediction method that is performed by a decoding device 300 according to an embodiment of the present disclosure.

FIGS. 5 to 7 are diagrams illustrating a template matching-based linear model determination method according to an embodiment of the present disclosure.

FIG. 8 is a diagram illustrating a schematic configuration of the intra predictor 331 for performing the intra prediction method according to the present disclosure.

FIG. 9 is a diagram illustrating an intra prediction method that is performed by an encoding device 200 according to an embodiment of the present disclosure.

FIG. 10 is a diagram illustrating a schematic configuration of the intra predictor 222 for performing the intra prediction method according to the present disclosure.

FIG. 11 is an example of a contents streaming system to which embodiments of the present disclosure may be applied.

[Modes of the Invention]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

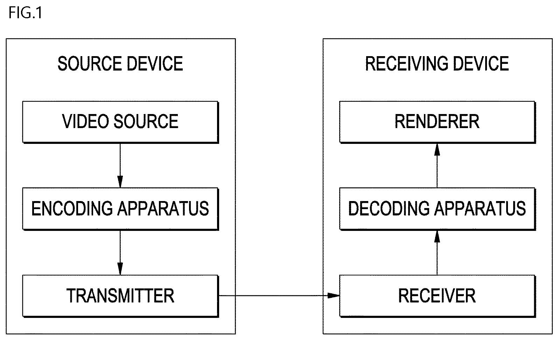

FIG. 1 is a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

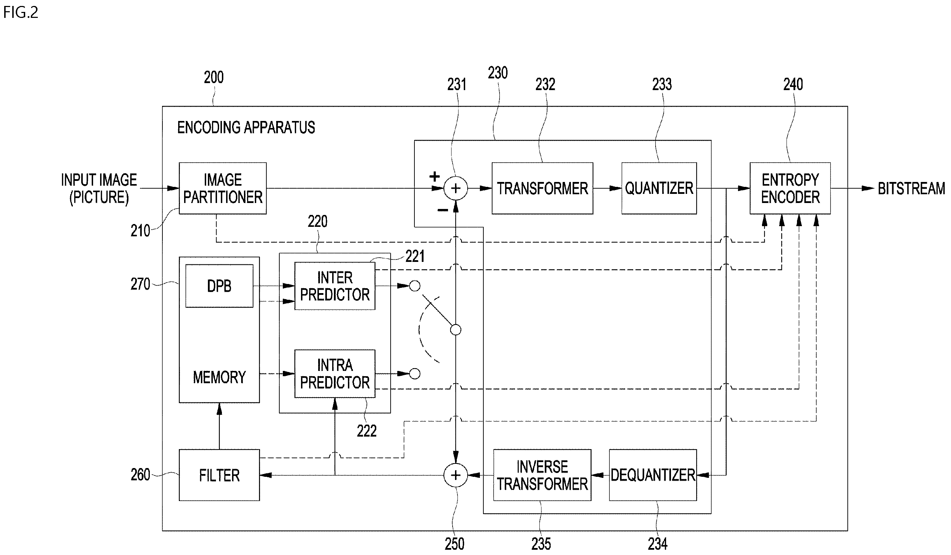

FIG. 2 is a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Nonlinear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

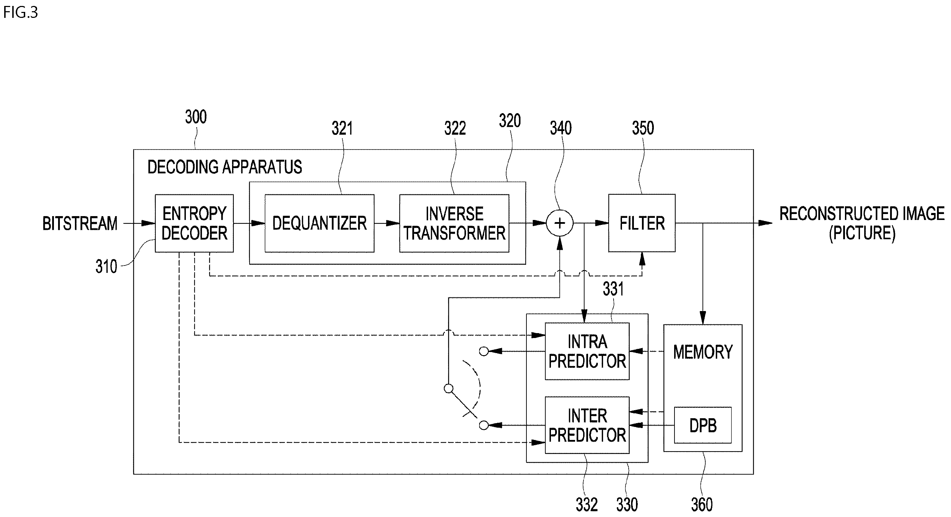

FIG. 3 is a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 322.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

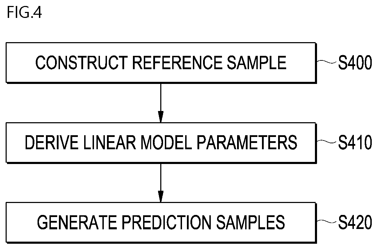

FIG. 4 is a diagram illustrating an intra prediction method that is performed by a decoding device 300 according to an embodiment of the present disclosure.

The embodiment of the present disclosure provides a method of deriving a linear model based on neighboring reconstructed samples of a current block and performing intra prediction using the derived linear model. In describing the embodiment of the present disclosure, an intra prediction method using a linear model is referred to as linear model prediction, but is of course not limited to this name. In the present disclosure, the linear model prediction may also be referred to as linear model intra prediction, linear prediction, linear intra prediction, model prediction, model intra prediction, linear model-based prediction, linear model-based intra prediction, location-based linear prediction, location-based linear model prediction, location-based linear model intra prediction, etc.

Referring to FIG. 4, the decoding device may construct a reference sample for linear model intra prediction based on the neighboring reconstructed samples of the current block (S400), and derive linear model parameters (or variables) based on the constructed reference sample (S410). In other words, the decoding device may construct a reference sample for linear model intra prediction based on the neighboring reconstructed samples of the current block, and derive (or determine) a linear model based on the constructed reference sample. A linear model used for the linear model intra prediction may be derived based on the linear model parameters derived in operation S410. Hereinafter, various embodiments of a linear model-based intra prediction method will be described in detail.

According to an embodiment of the present disclosure, the linear model may be derived based on the neighboring reconstructed samples of the current block. Specifically, the linear model parameters may be derived using values and/or coordinate information (or location information) of neighboring reconstructed samples, and the linear model may be determined based on the derived linear model parameters. In the present disclosure, the linear model may also be referred to as a linear formula or a linear equation. Assuming that the current block is N×N, a prediction sample at the position (x, y) may be generated (or calculated and derived) using the following Equation 1(S420). In other words, a linear model such as the following Equation 1 may be defined, and the prediction sample at the position (x, y) may be generated using the linear model such as the following Equation 1.

[Equation 1]

$$Pred_{(x,y)} = ax + by + c$$

In the above Equation 1, a, b, and c represent linear model parameters (or variables). In the present disclosure, c is a constant, which may be referred to as a linear model parameter or an offset. The linear model may be determined according to the linear model parameters. In addition, a and b may be referred to as horizontal (horizontal component) parameters and vertical (vertical component) parameters, respectively. Since the linear model is determined based on the linear model parameters, the linear model parameters may be the linear model or may be abbreviated as the linear model. In order to derive the parameters a, b, and c of the above Equation 1, the values and coordinate information (or location information) of already reconstructed samples around the current block may be used.

Specifically, an equation that minimizes an error between the prediction sample and the reconstructed sample may be derived through the following Equation 2 by utilizing an equation expressing a correlation between reconstructed pixel values and pixel coordinates. As described above, the term "sample" may be used to refer to the pixel in the present disclosure.

[Equation 2]

$$MSE = \frac{1}{L}\sum_{i=1}^{L}(Pred - Rec)^2$$

In the above Equation 2, L refers to the number of neighboring reconstructed samples. As an embodiment, L = 4N+1, and as in the following embodiment, L may be defined as various other numbers. In this case, as in the above Equation 1 described above, since Pred = ax+by+c and a minimum value of the squared error is 0, the following Equation 3 may be derived by performing partial differentiation on a, b, and c with respect to the above Equation 2.

[Equation 3]

$$\frac{\partial}{\partial a} \sum (Pred - Rec)^2 = \sum (ax^2 + bxy + cx) - \sum xRec$$

$$\frac{\partial}{\partial b} \sum (Pred - Rec)^2 = \sum (axy + by^2 + cy) - \sum yRec$$

$$\frac{\partial}{\partial c} \sum (Pred - Rec)^2 = \sum (ax + by + c) - \sum Rec$$

The above Equation 3 may be organized into a matrix for a, b, and c, as shown in the following Equation 4.

**[116]**        [Equation 4]

$$\begin{bmatrix} \sum x^2 & \sum xy & \sum x \\ \sum xy & \sum y^2 & \sum y \\ \sum x & \sum y & \sum 1 \end{bmatrix} \begin{bmatrix} a \\ b \\ c \end{bmatrix} = \begin{bmatrix} \sum xRec \\ \sum yRec \\ \sum Rec \end{bmatrix}$$

When the matrix

$$A = \begin{bmatrix} \sum x^2 & \sum xy & \sum x \\ \sum xy & \sum y^2 & \sum y \\ \sum x & \sum y & \sum 1 \end{bmatrix}$$

, the solution to

$$\begin{bmatrix} a \\ b \\ c \end{bmatrix}$$

by Cramer's rule may be expressed as the following Equation 5.

[Equation 5]

$$a = \frac{det\ (B_0)}{det\ (A)}$$

$$b = \frac{det\ (B_1)}{det\ (A)}$$

$$c = \frac{det\ (B_2)}{det\ (A)}$$

In the above Equation 5,

$$B_0 = \begin{bmatrix} \sum xRec & \sum xy & \sum x \\ \sum yRec & \sum y^2 & \sum y \\ \sum Rec & \sum y & \sum 1 \end{bmatrix}$$

,

$$B_1 = \begin{bmatrix} \sum x^2 & \sum xRec & \sum x \\ \sum xy & \sum yRec & \sum y \\ \sum x & \sum Rec & \sum 1 \end{bmatrix}, \qquad B_2 = \begin{bmatrix} \sum x^2 & \sum xy & \sum xRec \\ \sum xy & \sum y^2 & \sum yRec \\ \sum x & \sum y & \sum Rec \end{bmatrix}.$$

The matrix A may be calculated only with coordinate information. In addition, matrices B0, B1, and B2 may be calculated with coordinate information and reconstructed sample values of neighboring blocks.

As an example, it is assumed that 1) the current block is a 4×4 block, 2) a value of an upper-left reference sample adjacent to a top-left sample (or corner) of the current block is 533, 3) reference sample values included in an upper reference sample line adjacent to the right of the top-left reference sample are {514, 487, 456, 470, 535, 533, 527, 525} in order from the left, and 4) reference sample values included in a left reference sample line adjacent to the bottom of the top-left reference sample are {540, 528, 504, 489, 489, 489, 489, 489} in order from the top. In this case, the linear model parameters a, b, and c may be derived as shown in the following Equation 6.

[Equation 6]

$$a = \frac{81576}{178704} = 0.456487 \qquad , \qquad b = \frac{-549144}{178704} = -3.07293 \qquad ,$$

$$c = \frac{90894240}{178704} = 508.6301$$

Thereafter, the linear model according to the above Equation 1 may be determined based on the calculated parameter values a, b, and c. As an example, the values of the linear model parameters calculated based on the reconstructed reference sample according to the embodiment of the present disclosure may be values that are approximated through methods such as scaling, a shift operation, a fixed-point operation, and an integer operation. Based on the derived linear model, the prediction sample may be calculated based on the location of the sample in the current block. As an example, a prediction sample (or prediction block) of a 4×4 current block may be determined as shown in Table 1 below.

[Table 1]

| | | | |
|---|---|---|---|
| 509 | 510 | 510 | 510 |
| 506 | 507 | 507 | 507 |
| 503 | 503 | 504 | 504 |
| 500 | 500 | 501 | 501 |

Referring to Table 1, the prediction sample of the current sample may be calculated based on the linear model to be derived and the location of the current sample in the current block. In other words, the prediction sample may be calculated on a sample-by-sample basis (i.e., a pixel-by-pixel basis) based on the derived linear model and the sample location.

In the embodiment described above, description has been made on the assumption that, when the current block is N×N, 4N + 1 reference samples (i.e., 1 upper-left reference sample, 2N reference samples of the upper sample line, 2N reference samples of the left sample line) are used to derive the linear model (i.e., linear model parameters). In the following embodiment, a method of deriving a linear model using reference samples of various numbers or at various locations is described without being limited thereto.

According to an embodiment of the present disclosure, the linear model may be determined using the predefined specific number of reference samples and/or reference samples at specific locations. In other words, according to an embodiment of the present invention, the number and/or locations of reference samples used to derive linear model parameters may be predefined. The linear model parameter values of the linear model according to Equation 1 described above may change depending on which sample among the neighboring reference samples of the current block is utilized.

As an embodiment, when the current block is NxN, the linear model parameters may be derived using a total of 2N + 1 reference samples including 1 upper-left reference sample, N reference samples of the upper sample line, and N reference samples of the left sample line. For example, the N reference samples of the upper sample line may represent N reference samples that are consecutively adjacent to the right of the upper-left reference sample adjacent to the current block. In addition, the N reference samples of the left sample line may represent N reference samples that are consecutively adjacent to the bottom of the upper-left reference sample adjacent to the current block.

As in the above-described embodiment, when the reference sample values included in the upper reference sample line adjacent to the right of the upper-left reference sample are {514, 487, 456, 470} in order from the left, and the reference sample values included in the left reference sample line adjacent to the bottom of the upper-left reference sample are {540, 528, 504, 489} in order from the top, the linear model parameters a, b, and c may be calculated as -21.3228, -10.3905, and 505.8571, respectively. The prediction block may be generated using the derived linear model as shown in Table 2 below.

[Table 2]

| 506 | 485 | 464 | 442 |
|-----|-----|-----|-----|
| 496 | 475 | 453 | 432 |
| 486 | 464 | 443 | 422 |
| 475 | 454 | 433 | 411 |

In addition, as an embodiment, when the current block is NxN, the linear model parameters may be derived using a total of 2N reference samples including N reference samples of the upper sample line and N reference samples of the left sample line. For example, the N reference samples of the upper sample line may be N reference samples that are consecutively adjacent to the right of the upper-left reference sample adjacent to the current block. In addition, the N reference samples of the left sample line may be N reference samples that are consecutively adjacent to the bottom of the upper-left reference sample adjacent to the current block.

As in the above-described embodiment, when the reference sample values included in the upper reference sample line adjacent to the right of the upper-left reference sample are {514, 487, 456, 470} in order from the left, and the reference sample values included in the left reference sample line adjacent to the lower side of the upper-left reference sample are {540, 528, 504, 489} in order from the top, the linear model parameters a, b, and c may be calculated as -22.4667, - 11.5333, and 507, respectively. The prediction block may be generated using the derived linear model as shown in Table 3 below.

[Table 3]

| 507 | 485 | 463 | 440 |
|-----|-----|-----|-----|
| 496 | 473 | 451 | 429 |
| 484 | 462 | 439 | 417 |
| 473 | 450 | 428 | 405 |

In addition, as an embodiment, when the current block is NxN, the linear model parameters may be derived using a total of 2N + 2 reference samples including N + 1 reference samples of the upper sample line and N + 1 reference samples of the left sample line. In this case, the N + 1 reference samples of the upper sample line may be N + 1 reference samples that are consecutively adjacent to the right of the upper-left reference sample adjacent to the current block. In addition, the N + 1 reference samples of the left sample line may be N + 1 reference samples that are consecutively adjacent to the bottom of the upper-left reference sample adjacent to the current block. In the present embodiment, the reference samples used to derive the linear model parameters may be the same as the neighboring reference samples used in a planar prediction mode of the VVC.

As in the above-described embodiment, when the reference sample values included in the upper reference sample line adjacent to the right of the upper-left reference sample are {514, 487, 456, 470, 535} in order from the left, and the reference sample values included in the left reference sample line adjacent to the bottom of the upper-left reference sample are {540, 528, 504, 489, 489} in order from the top, the linear model parameters a, b, and c may be calculated as 8.08446, -6.30264, and 509.3226 respectively. The prediction block may be generated using the derived linear model as shown in Table 3 below.

[Table 4]

| 510 | 502 | 494 | 486 |
|-----|-----|-----|-----|
| 504 | 495 | 487 | 479 |
| 497 | 489 | 481 | 473 |

(continued)

| 491 | 483 | 475 | 467 |
|-----|-----|-----|-----|

In addition, as an embodiment, only even-numbered or odd-numbered pixels among the reference samples, rather than consecutive pixels, may be used to derive linear model parameters. In other words, only the even-numbered or odd-numbered pixels from the left in order among the reference samples included in the upper reference sample line may be used to derive the linear model parameters, and only the even-numbered or odd-numbered pixels in order from the top among the reference samples included in the left reference sample line may be used to derive the linear model parameters.

In addition, as an embodiment, the number of pixels used to derive the linear model parameters may be variably determined according to a block size. For example, in the case of a block smaller than or equal to a predefined size, a linear model may be determined using A reference samples, and in the case of a block larger than the predefined size, a linear model may be determined using B reference samples and linear samples. A and B may each be a specific number according to any one of the embodiments described above. For example, in a block having a pixel number less than or equal to $16 \times 16$, the 4N + 1 reference samples described above may be used to determine the linear model, and in a block having the number of pixel number exceeding 16x16, 2N reference samples may be used to determine the linear model. The predefined size described above may be the maximum or minimum size for linear model prediction. In addition, the number of reference samples according to the block size may be defined in various combinations.

In addition, according to an embodiment of the present disclosure, the linear model may be derived using some of the derived parameters. In other words, the linear model may be derived using reconstructed pixels around the current block and coordinate information of the pixels, but the linear model may be determined using only some of the derived linear model parameters. As an example, a horizontal linear model and a vertical linear model may be derived by a method in which parameters for an x-coordinate or a y-coordinate are not used, and the prediction block may be generated based on the derived horizontal linear model and vertical linear model.

Referring back to Equation 1 described above, parameter a is a parameter for an x-axis, and b is a parameter for a y-axis. In other words, parameter a is a parameter for a horizontal direction, and b is a parameter for a vertical direction. In the present embodiment, a horizontal linear model and/or a vertical linear model may be defined by forcing (or setting) the a or b parameter to 0. In describing the embodiment of the present disclosure, a linear model in which some of the derived linear model parameters are set to 0 is referred to as a horizontal/vertical linear model, but it is of course not limited to this name. In the present disclosure, the horizontal/vertical linear model may also be referred to as a horizontal/vertical constrained model, a horizontal/vertical constrained linear model, a first/second constrained linear model, a horizontal/-vertical approximate model, a horizontal/vertical approximate linear model, a first/second approximate linear model, a constrained model, a constrained linear model, an approximate model, an approximate linear model.

That is, according to the present embodiment, after deriving the linear model parameters of Equation 1 based on the neighboring reference samples according to the embodiment described above, the horizontal/vertical linear model may be finally determined by setting a or b to 0. The final derived horizontal/vertical linear models may be expressed as in Equation 7 below, respectively.

$$[Equation \ 7]$$
$$HorPred_{(x,y)} = \quad by + c$$
$$VerPred_{(x,y)} = ax + c$$

Referring to Equation 7, since HorPred has the same prediction sample values in the horizontal direction and VerPred has the same prediction sample values in the vertical direction, HorPred may be referred to as a horizontal linear model and VerPred may be referred to as a vertical linear model. On the other hand, since HorPred has parameters related to horizontal variation set to 0 so that parameters related to vertical variation remain, and VerPred has parameters related to vertical variation set to 0 so that parameters related to horizontal variation remain, HorPred may be referred to as a vertical linear model, and VerPred may be referred to as a horizontal linear model. In other words, HorPred/VerPred of Equation 7 described above may be referred to as a horizontal/vertical linear model or a vertical/horizontal linear model, respectively, but in the following embodiments, HorPred/VerPred of Equation 7 will be referred to as a horizontal/vertical linear model, respectively.

As an example, a prediction block may be generated using either the vertical linear model or the horizontal linear model of Equation 7. Alternatively, as an example, two prediction blocks (or prediction samples) may be generated using the vertical linear model and the horizontal linear model, and the two generated prediction blocks may be weighted-summed to generate a final prediction block (or prediction sample). The two prediction blocks generated using the respective models may be referred to as initial prediction blocks or temporary prediction blocks.

Alternatively, as an example, a prediction sample may be blended (or weighted-summed) with the prediction block generated by the linear model described in Equation 1 at a certain ratio to be derived as the final prediction sample. For example, the final prediction block may be calculated in the form FinalPred = (3*HorPred+Pred)/4. Or, the final prediction block may be calculated in the form FinalPred = (3*VerPred+Pred)/4. Here, Pred represents a prediction sample (or prediction block) generated by the linear model described in Equation 1.

Alternatively, the prediction block generated from the vertical linear model or the horizontal linear model may be blended with the prediction block generated by the planar mode at a certain ratio to be derived as the final prediction sample. For example, the final prediction block may have a form such as FinalPred = (3*HorPred+Planar)/4. Or, the final prediction block may have a form such as FinalPred = (3*VerPred+Planar)/4. Here, Planar represents the prediction sample generated by the planar mode.

In addition, according to an embodiment of the present disclosure, a weight may be applied to a parameter in a specific direction. That is, the linear model may be derived by applying weights to some of the derived parameters. In other words, the linear model may be derived by using reconstructed pixels around the current block and coordinate information of the pixels, and the linear model may be determined by applying weights to some of the derived linear model parameters. As an example, a horizontal linear model and a vertical linear model may be derived by a method in which weighted parameters are applied as the parameters for the x-coordinate or y-coordinate, and the prediction block may be generated based on this derivation.

That is, according to the present embodiment, after the linear model parameters of Equation 1 are derived based on the neighboring reference samples according to the embodiment described above, the horizontal/vertical linear model may be finally determined by applying weights to a or b. The finally derived horizontal/vertical linear models may be expressed as the following Equation 8, respectively.

$$[\text{Equation 8}]$$
$$HorPred_{(x,y)} = w_x ax + by + c$$
$$VerPred_{(x,y)} = ax + w_b by + c$$

In Equation 8, weights $w_x$ and $w_b$ represent weights for a change amount a on the x-axis and a change amount b on the y-axis, respectively. The vertical linear model and the horizontal linear model of Equation 8 may be used as a single prediction block. That is, as an example, the prediction block may be generated using either the vertical linear model or the horizontal linear model of Equation 8. Alternatively, as an example, two prediction blocks (or prediction samples) may be generated using the vertical linear model and the horizontal linear model, and the two generated prediction blocks may be weighted-summed to generate a final prediction block (or prediction sample). The two prediction blocks generated using the respective models may be referred to as initial prediction blocks or temporary prediction blocks.

Alternatively, as an example, the prediction sample may be generated using either the vertical linear model or the horizontal linear model, and the generated prediction block may be blended (or weighted-summed) with the prediction block generated by the linear model described in Equation 1 at a certain ratio to be derived as the final prediction sample. For example, the final prediction block may be calculated in the form FinalPred = (3*HorPred+Pred)/4. Or, for example, the final prediction block may have a form such as FinalPred = (3*VerPred + Planar)/4.

Alternatively, the prediction block generated from the vertical linear model or the horizontal linear model of Equation 8 may be blended with the prediction block generated by a planar mode at a certain ratio to be derived as the final prediction sample. For example, the final prediction block may have a form such as FinalPred = (3*HorPred+Planar)/4. Or, for example, the final prediction block may have a form such as FinalPred = (3*VerPred + Planar)/4. Here, Planar represents the prediction sample generated by the planar mode.

Hereinafter, a method of signaling information related to the linear model prediction method described above is described. The linear model prediction method described above may be the linear model prediction method previously described in the embodiment of FIG. 4. According to an embodiment, a separate flag indicating the linear model prediction method described above as an intra prediction mode may be signaled.

[Table 5]

| coding_unit( x0, y0, cbWidth, cbHeight, cqtDepth, treeType, modeType ) { | Descriptor |
|---|---|
| … | |
| **linear_model_intra_pred_mode**[ x0 ][ y0 ] | ae(v) |
| … | |

For example, as shown in Table 5, at a coding unit level, a flag indicating a linear model prediction mode as an independent new intra prediction mode rather than most probable mode (MPM) and intra direction mode may be signaled. In Table 5, linear_model_intra_pred_mode is a syntax element indicating whether linear model prediction (or linear model prediction mode) is applied to a current coding unit.

In another embodiment, a syntax for signaling the flag as an intra prediction mode and simultaneously signaling the embodiment previously described with reference to Equations 7 and 8 may be defined as shown in Table 6 below.

[Table 6]

| coding_unit( x0, y0, cbWidth, cbHeight, cqtDepth, treeType, modeType ) { | Descriptor |
|---|---|
| … | |
| **linear_model_intra_pred_mode**[ x0 ][ y0 ] | ae(v) |
| if (linear_model_intra_pred_mode[ x0 ][ y0 ]) | |
|   **plane_linear_mode_flag** [ x0 ][ y0 ] | ae(v) |
|   if (!is_plane_linear_mode[ x0 ][ y0 ]) | |
|     **linear_dir_flag**[ x0 ][ y0 ] | ae(v) |
| … | |

Referring to Table 6, linear_model_intra_pred_mode is a syntax element indicating whether linear model prediction is applied (or used) to the current coding unit. When linear_model_intra_pred_mode indicates that the linear model prediction is applied, a syntax element for indicating a linear model among a plurality of linear models to be applied to the current coding unit may be signaled.

That is, when linear_model_intra_pred_mode indicates that the linear model prediction is applied, plane_linear_mode_flag indicating whether general linear model prediction is applied may be signaled. General linear model prediction may represent the linear model previously described with reference to Equation 1. In the present disclosure, the general linear model prediction may be referred to as plane linear model prediction or non-directional linear model prediction.

When the plane_linear_mode_flag indicates that the general linear model prediction is not applied to the current coding unit, directional linear model prediction may be applied to the current coding unit. The directional linear model prediction may represent the linear model previously described with reference to Equations 7 and 8.

In this case, a syntax element for specifying the directional linear model prediction to be applied to the current coding unit may be additionally signaled. linear_dir_flag represents a syntax element specifying either the vertical linear model or the horizontal linear model.

In another embodiment, the proposed linear prediction method may be used only for blocks of a specific size. For example, the syntax as shown in Table 7 below may be defined.

[Table 7]

| coding_unit( x0, y0, cbWidth, cbHeight, cqtDepth, treeType, modeType ) { | Descriptor |
|---|---|
| … | |
| if ( cbWidth >= MinLinPredSize && cbHeight >= MinLinPredSize ) { | |
|   **linear_model_intra_pred_mode**[ x0 ][ y0 ] | ae(v) |
|   if ( linear_model_intra_pred_mode[ x0 ][ y0 ] ) | |
|     **plane_linear_mode_flag** [ x0 ][ y0 ] | ae(v) |
|     if (!is_plane linear_mode[ x0 ][ y0 ]) | |
|       **linear_dir_flag**[ x0 ][ y0 ] | ae(v) |
| } | |
| … | |

The syntax elements to be signaled and included in the syntax of Table 7 may be the same as the syntax elements previously described with reference to Tables 5 and 6. Redundant descriptions related thereto are omitted. Referring to Table 7, when the width and height of the current coding block are larger than or equal to a predefined size, the linear model prediction proposed in the present disclosure may be applied thereto. The predefined size may be defined as a variable. MinLinPredSize represents the minimum size to which the linear model prediction is applied. MinLinPredSize may be defined as an integer greater than or equal to 0. For example, MinLinPredSize may be 4, 8, or 16.

In the above, the embodiment of signaling the linear model prediction mode has been described. Hereinafter, a method of determining the linear model prediction mode using a template matching method will be described.

According to an embodiment of the present disclosure, a plurality of linear models may be available, and a linear model to be applied to the current block among the plurality of linear models may be determined using template matching. As an embodiment, as previously described with reference to Table 5, the flag indicating whether linear model prediction is used for the current block may be signaled. When the flag indicates that linear model prediction is used for the current block, a linear model to be applied to the current block among the plurality of linear models may be determined using template matching. The plurality of linear models may include the general linear model prediction and the directional general linear model prediction described above. That is, the general linear model prediction may represent the linear model previously described with reference to Equation 1. The directional linear model prediction may represent the linear model previously described with reference to Equations 7 and 8.

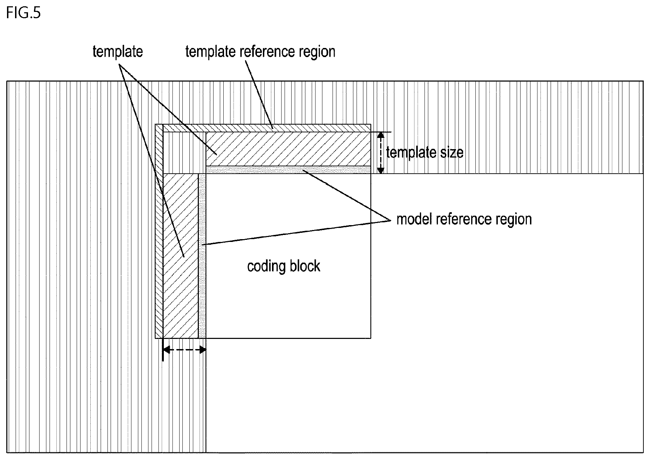

A template region may be defined within a reconstructed region around the current block, and a linear model may be determined based on the defined template region. Specific reference regions are described with reference to FIGS. 5 to 7.

FIGS. 5 to 7 are diagrams illustrating a template matching-based linear model determination method according to an embodiment of the present disclosure.

Referring to FIG. 5, the linear model of the current block (or the current coding block) may be determined as one of a plurality of linear models using template matching. The template region may be determined as a region adjacent to the left and/or upper side of the current block. In this case, the size of the template region may be predefined. For example, the size of the template region of FIG. 5 may be a predefined fixed integer value. Alternatively, for example, the size of the template region of FIG. 5 may be determined based on either the width or the height of the current block.

In the present embodiment, the general linear model and the directional linear model (vertical/horizontal linear model) may be determined based on the cost of the template region of the current block. In this case, the cost may be calculated based on the difference between a prediction sample (or prediction block) predicted from the template region and a reconstructed sample. For example, the sum of absolute difference (SAD) and sum of absolute transformed difference (SATD) may be used for cost calculation.

As shown in FIG. 5, first, a plurality of linear models may be derived using a reference region of the current block. That is, the general linear model, the vertical linear model, and the horizontal linear model may be derived using the reference region of the current block. The prediction sample of the template region may be derived using the derived general linear model, the vertical linear model, and the horizontal linear model. Based on this derivation, a linear model having the smallest cost among the derived general linear model, vertical linear model, and horizontal linear model may be selected. That is, a linear model type having the smallest cost may be determined as an intra mode of the current block. Thereafter, the prediction sample of the current block may be generated using the reference region of the current block and the selected linear model.

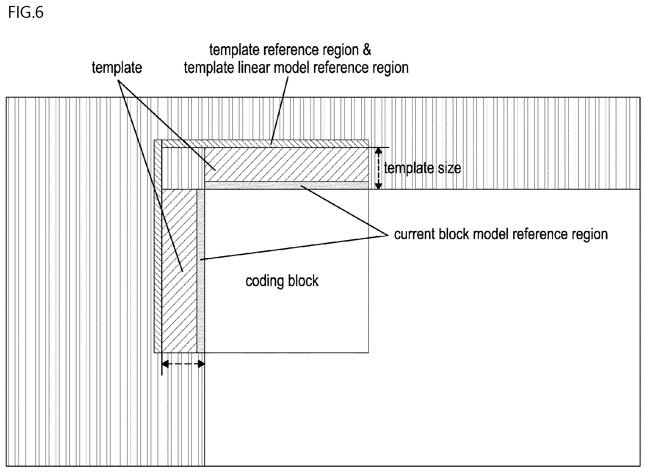

In FIG. 5, an embodiment in which the linear model is derived using the reference region of the current block and the cost of the template region is calculated is described. On the other hand, FIG. 6 illustrates an embodiment in which a linear model is derived using the reference region of the template region and the cost of the template region is calculated.

Referring to FIG. 6, a plurality of linear models may be derived using the reference region of the template region. The linear model having the smallest cost among the derived general linear model, vertical linear model, and horizontal linear model may be selected. A linear model type having the smallest cost of the template region is determined, and a linear model of the determined linear model type (general, vertical, or horizontal) may be derived again using the reference region of the current block. That is, the linear model parameters of the current block may be derived using the reference region of the current block using the linear model selected type. The prediction sample of the current block may be generated using the finally derived linear model.

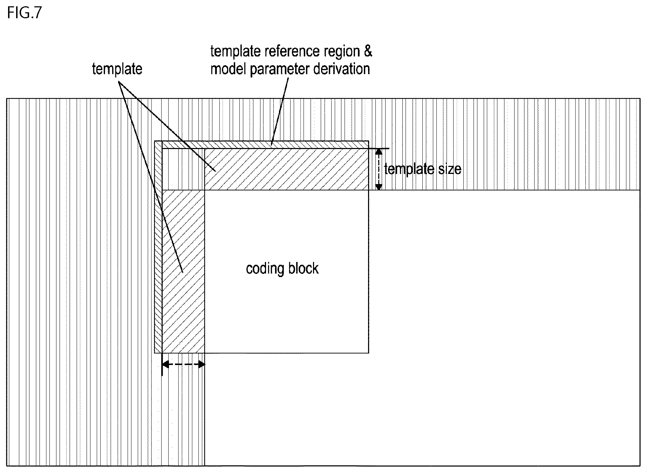

Referring to FIG. 7, a plurality of linear models may be derived using the reference region of the template region. The linear model having the smallest cost among the derived general linear model, vertical linear model, and horizontal linear model may be selected. The linear model type having the smallest cost of the template region is determined, and the prediction sample of the current block may be generated using the linear model of the determined linear model type (general, vertical, or horizontal). That is, among the plurality of linear models derived using the reference region of the template region, the linear model selected based on the template matching cost may be directly used to generate the prediction sample of the current block.

In addition, in another embodiment, the linear model prediction modes are sorted in order of the lowest cost using the template matching described above, and information indicating the linear model prediction mode used to predict the linear model of the current block may be signaled. That is, information about whether a linear prediction method is applied and which linear prediction mode is used is transmitted, but the order of candidates may be sorted in order of the lowest cost through template-based SATD, and the mode of the current block may be signaled based on the list of sorted candidates.

Hereinafter, a method of signaling information related to the linear model prediction method described above is described. The linear model prediction method described above may be the linear model prediction method previously described in the embodiments of FIGS. 4 to 7. According to an embodiment, the linear model prediction mode may be coded as a part of an extended mode of the planar mode. Table 8 below may be defined.

[Table 8]

| coding_unit( x0, y0, cbWidth, cbHeight, cqtDepth, treeType, modeType ) { | Descriptor |
|---|---|
| … | |
| **intra_luma_mpm_flag**[ x0 ][ y0 ] | ae(v) |
| if( intra_luma_mpm_flag[ x0 ][ y0 ] ) { | |
| if( intra_luma_ref idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| else | |
| **linear_model_pred_flag[** x0 ][ y0 ] | ae(v) |
| } else | |
| **intra_luma_mpm_remainder**[ x0 ][ y0 ] | ae(v) |
| … | |
| } | |

Referring to Table 8, when intra_luma_not_planar_flag indicates that the planar mode is applied to the current block, a flag indicating the linear model prediction mode may be signaled. In Table 8, the linear_model_intra_pred_mode is a syntax element indicating whether the linear model prediction (or linear model prediction mode) is applied to the current coding unit.

In another embodiment, a syntax for signaling the flag as the intra prediction mode and simultaneously signaling the embodiment described with reference to Equations 7 and 8 may be defined as in Table 9 below.

[Table 9]

| coding_unit( x0, y0, cbWidth, cbHeight, cqtDepth, treeType, modeType ) { | Descriptor |
|---|---|
| … | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| else { | |
| **linear_model_pred_flag**[ x0 ][ y0 ] | ae(v) |
| if ( lineaer_model_pred _flag[ x0 ][ y0 ] ) { | |
| **plane_linear_mode_flag**[ x0 ][ y0 ] | ae(v) |
| if ( plane_linear_mode_flag[ x0 ][ y0 ] ) | |
| **linear_dir_flag**[ x0 ][ y0 ] | ae(v) |

(continued)

| | |
|---|---|
| } | |
| } | |
| } else | |
| **intra_luma_mpm_remainder**[ x0 ][ y0 ] | ae(v) |
| … | |
| } | |

Referring to Table 9, linear_model_intra_pred_mode is a syntax element indicating whether linear model prediction is applied (or used) to the current coding unit. When the linear_model_intra_pred_mode indicates that linear model prediction is applied thereto, a syntax element for indicating a linear model among a plurality of linear models to be applied to the current coding unit may be signaled.

That is, when the linear_model_intra_pred_mode indicates that linear model prediction is applied thereto, plane_linear_mode_flag indicating whether general linear model prediction is applied may be signaled. General linear model prediction may represent a linear model previously described with reference to Equation 1. In the present disclosure, the general linear model prediction may be referred to as plane linear model prediction or non-directional linear model prediction.

When the plane_linear_mode_flag indicates that the general linear model prediction is not applied to the current coding unit, the directional linear model prediction may be applied to the current coding unit. The directional linear model prediction may represent the linear model previously described with reference to Equations 7 and 8.

In this case, a syntax element for specifying the directional linear model prediction to be applied to the current coding unit may be additionally signaled. linear_dir_flag represents a syntax element specifying either the vertical linear model or the horizontal linear model.

In another embodiment, the proposed linear prediction method may be used only for blocks of a specific size. For example, the syntax as shown in Table 10 below may be defined.

[Table 10]

| coding_unit( x0, y0, cbWidth, cbHeight, cqtDepth, treeType, modeType ) { | Descriptor |
|---|---|
| … | |
| **intra_luma_mpm_flag[** x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| else { | |
| if ( cbWidth >= MinLinPredSize && cbHeight >= MinLinPredSize ) { | |
| **linear_model_pred_flag**[ x0 ][ y0 ] | ae(v) |
| if ( lineaer_model_pred_flag[ x0 ][ y0 ] ) { | |
| **plane_linear_mode_flag**[ x0 ][ y0 ] | ae(v) |
| if ( plane_mode_flag[ x0 ][ y0 ] ) | |
| **linear_dir_flag**[ x0 ][ y0 ] | ae(v) |
| } | |
| } | |
| } | |
| } else | |
| **intra_luma_mpm_remainder**[ x0 ][ y0 ] | ae(v) |

(continued)

| … | |
|---|---|
| } | |

The syntax elements to be signaled and included in the syntax of Table 10 may be identical to the syntax elements previously described with reference to Tables 8 and 9. Redundant descriptions related thereto are omitted. Referring to Table 10, the linear model prediction proposed in the present disclosure may be applied when the width and height of the current coding block are greater than or equal to a predefined size. The predefined size may be defined as a variable. MinLinPredSize represents the minimum size to which the linear model prediction is applied. MinLinPredSize may be defined as an integer greater than or equal to 0. For example, MinLinPredSize may be 4, 8, or 16.

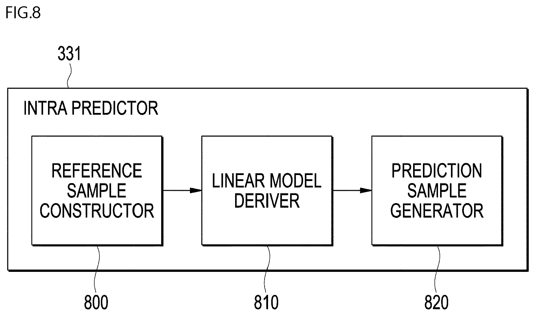

FIG. 8 is a diagram illustrating a schematic configuration of the intra predictor 331 for performing the intra prediction method according to the present disclosure.

Referring to FIG. 8, the intra predictor 331 may include a reference sample constructor 800, a linear model deriver 810, and a prediction sample generator 820.

Specifically, the reference sample constructor 800 may construct a reference sample for linear model intra prediction based on neighboring reconstructed samples of the current block. The linear model deriver 810 may derive linear model based on the constructed reference sample. In other words, the reference sample constructor 800 may construct the reference sample for the linear model intra prediction based on the neighboring reconstructed samples of the current block, and the linear model deriver 810 may derive (or determine) the linear model based on the constructed reference sample. The linear model used for the linear model intra prediction may be derived according to the linear model parameters derived by the linear model deriver 810. Various embodiments of the linear model-based intra prediction method have been described above with reference to FIGS. 4 and 7, and repeated descriptions thereof will be omitted.

As described above, the linear model deriver 810 may derive the linear model based on the neighboring reconstructed samples of the current block. Specifically, the linear model deriver 810 may be derived using values and/or coordinate information (or location information) of neighboring reconstructed samples, and the linear model may be determined based on the derived linear model parameters. In this case, the linear model such as the above-described Equation 1 may be defined, and the prediction sample at the position (x, y) may be generated using the linear model as in Equation 1.

In addition, as described above, the linear model may be determined using a predefined specific number of reference samples and/or reference samples at specific locations. In other words, according to an embodiment of the present invention, the number and/or locations of reference samples used to derive the linear model parameters may be predefined. The linear model parameter values of the linear model according to Equation 1 described above may change depending on which sample among the neighboring reference samples of the current block is utilized.

In addition, as described above, the linear model deriver 810 may derive a linear model based on available reference pixels among the reconstructed pixels around the current block. In other words, the linear model parameter deriver 810 may derive the linear model using only pixels having valid values among the neighboring pixels of the current block.

In addition, as described above, the linear model parameter deriver 810 may derive the linear model using some of the derived parameters. In other words, the linear model deriver 810 may derive a linear equation using reconstructed pixels around the current block and coordinate information of the pixels, but may determine the linear model using only some of the derived linear model parameters. As an example, a horizontal linear model and a vertical linear model may be derived by a method in which parameters for the x-coordinate or the y-coordinate are not used, and the prediction block may be generated based on the horizontal linear model and the vertical linear model.

In addition, as described above, the embodiments previously described with reference to Tables 5 to 10 may be applied substantially in the same manner. That is, information related to linear model intra prediction may be signaled using the method previously described with reference to Tables 5 to 10. Redundant descriptions related thereto are omitted.

In addition, as described above, the linear model to be applied to the current block may be determined from among a plurality of linear models based on template matching.

The prediction sample generator 820 may generate the prediction sample of the current block based on the linear model parameters. In other words, the prediction sample generator 820 may perform intra prediction for the current block based on the derived linear model parameters (or linear model). Based on the derived linear model, the prediction sample may be generated in units of samples according to the location of the current sample within the current block.

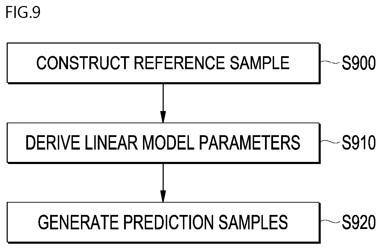

FIG. 9 is a diagram illustrating an intra prediction method that is performed by an encoding device 200 according to an embodiment of the present disclosure.

In an embodiment of the present disclosure, a linear model intra prediction method performed by an encoding device is described. The encoding device may derive the linear model based on the neighboring reconstructed samples of the current block and perform the intra prediction using the derived linear model. The embodiments described above with reference to FIGS. 4-8 may be applied to the linear model intra prediction in substantially the same manner, and redundant descriptions thereof will be omitted.

Referring to FIG. 9, the encoding device may construct a reference sample for linear model intra prediction based on the neighboring reconstructed samples of the current block (S900), and derive linear model based on the constructed reference sample (S910). In other words, the encoding device may construct a reference sample for linear model intra prediction based on the neighboring reconstructed samples of the current block, and derive (or determine) a linear model based on the constructed reference sample. A linear model used for the linear model intra prediction may be derived based on the linear model parameters derived in operation S910.

The encoding device may derive the linear model based on the neighboring reconstructed samples of the current block. Specifically, the linear model parameters may be derived using values and/or coordinate information (or location information) of neighboring reconstructed samples, and the linear model may be determined based on the derived linear model parameters. In this case, the linear model such as the above-described Equation 1 may be defined, and the prediction sample at the position (x, y) may be generated using the linear model such as the following Equation 1.

In addition, as described above, the linear model may be determined using a predefined specific number of reference samples and/or reference samples at specific locations. In other words, according to an embodiment of the present invention, the number and/or locations of reference samples used to derive the linear model parameters may be predefined. The linear model parameter values of the linear model according to Equation 1 described above may change depending on which sample among the neighboring reference samples of the current block is utilized.

In addition, as described above, the encoding device may derive the linear model based on available reference pixels among the reconstructed pixels around the current block. In other words, the encoding device may derive the linear model using only pixels having valid values among the neighboring pixels of the current block.

In addition, as described above, the encoding device may derive the linear model using some of the derived parameters. In other words, the encoding device may derive a linear equation using reconstructed pixels around the current block and coordinate information of the pixels, but may determine the linear model using only some of the derived linear model parameters. As an example, a horizontal linear model and a vertical linear model may be derived by a method in which parameters for the x-coordinate or the y-coordinate are not used, and the prediction block may be generated based on the horizontal linear model and the vertical linear model.

In addition, as described above, the embodiments previously described with reference to FIGS. 4 to 8 may be applied substantially in the same manner. That is, information related to linear model intra prediction may be signaled using the method previously described with reference to FIGS. 4 to 8.

In addition, as described above, the linear model to be applied to the current block may be determined from among a plurality of linear models based on template matching.

The encoding device may generate the prediction sample of the current block based on the linear model(S920). In other words, the encoding device may perform the intra prediction on the current block based on the derived linear model parameters (or linear model). Based on the derived linear model, the prediction sample may be generated in units of samples according to the location of the current sample in the current block.

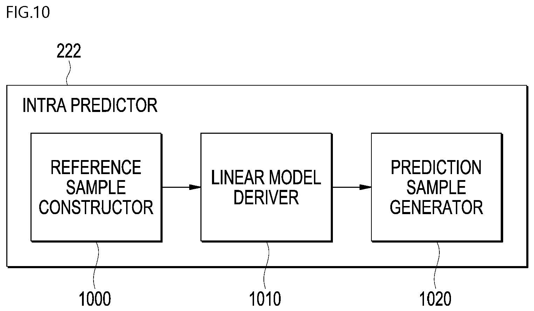

FIG. 10 is a diagram illustrating a schematic configuration of the intra predictor 222 for performing the intra prediction method according to the present disclosure.

Referring to FIG. 10, the intra predictor 222 may include a reference sample constructor 1000, a linear model deriver 1010, and a prediction sample generator 1020.

Specifically, the reference sample constructor 1000 may construct a reference sample for linear model intra prediction based on neighboring reconstructed samples of the current block. The linear model deriver 1010 may derive linear model parameters (or variables) based on the constructed reference sample. In other words, the reference sample constructor 1000 may construct the reference sample for the linear model intra prediction based on the neighboring reconstructed samples of the current block, and the linear model deriver 1010 may derive (or determine) the linear model based on the constructed reference sample. The linear model used for the linear model intra prediction may be derived according to the linear model parameters derived by the linear model deriver 1010. Various embodiments of the linear model-based intra prediction method have been described above with reference to FIGS. 4-7, and repeated descriptions thereof will be omitted.

As described above, the linear model deriver 1010 may derive the linear model based on the neighboring reconstructed samples of the current block. Specifically, the linear model deriver 1010 may derive the linear model parameters using values and/or coordinate information (or location information) of neighboring reconstructed samples, and the linear model may be determined based on the derived linear model parameters. In this case, the linear model such as the above-described Equation 1 may be defined, and the prediction sample at the position (x, y) may be generated using the linear model as in Equation 1.

In addition, as described above, the linear model may be determined using a predefined specific number of reference samples and/or reference samples at specific locations. In other words, according to an embodiment of the present invention, the number and/or locations of reference samples used to derive the linear model parameters may be predefined. The linear model parameter values of the linear model according to Equation 1 described above may change depending on which sample among the neighboring reference samples of the current block is utilized.

In addition, as described above, the linear model deriver 1010 may derive the linear model based on available reference pixels among the reconstructed pixels around the current block. In other words, the linear model parameter deriver 1010 may derive the linear model using only pixels having valid values among the neighboring pixels of the current block.

In addition, as described above, the linear model deriver 1010 may derive the linear model using some of the derived parameters. In other words, the linear model deriver 1010 may derive a linear equation using reconstructed pixels around the current block and coordinate information of the pixels, but may determine the linear model using only some of the derived linear model parameters. As an example, a horizontal linear model and a vertical linear model may be derived by a method in which parameters for the x-coordinate or the y-coordinate are not used, and the prediction block may be generated based on the horizontal linear model and the vertical linear model.

In addition, as described above, the embodiments previously described with reference to Tables 5 to 10 may be applied substantially in the same manner. That is, information related to linear model intra prediction may be signaled using the method previously described with reference to Tables 5 to 10. Redundant descriptions related thereto are omitted.

Furthermore, as described above, a linear model applied to the current block may be determined among a plurality of linear models based on a template matching.

The prediction sample generator 820 may generate the prediction sample of the current block based on the linear model parameter. In other words, the prediction sample generator 820 may perform the intra prediction on the current block based on the derived linear model parameters (or linear model). Based on the derived linear model, the prediction sample may be generated in units of samples according to the location of the current sample in the current block.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

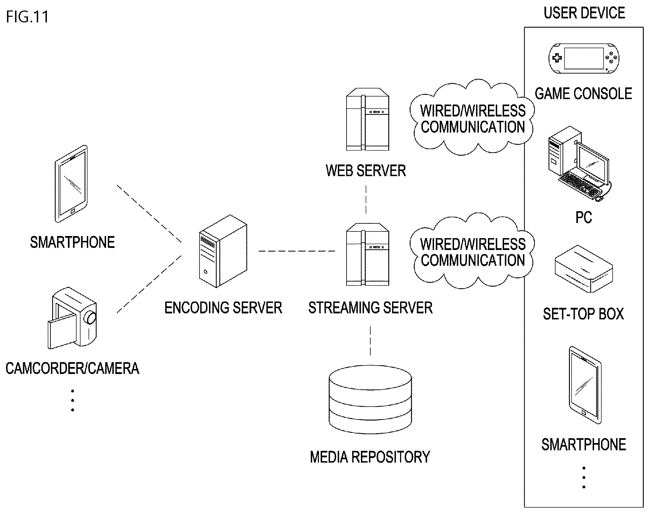

FIG. 11 is an example of a contents streaming system to which embodiments of the present disclosure may be applied.

Referring to FIG. 11, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD)), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method comprising:

   constructing a reference sample for linear model prediction of a current block based on reconstructed neighboring samples of the current block;
   deriving a linear model of the current block based on the reference sample; and
   generating a prediction sample of the current block based on the linear model.

2. The image decoding method according to claim 1, wherein the linear model of the current block is derived using coordinate information of the reference sample and a value of the reference sample.

3. The image decoding method according to claim 2, wherein the reference sample includes at least one of reference samples included in a left sample line adjacent to the current block, reference samples included in an upper sample line adjacent to the current block, or upper-left reference samples adjacent to the current block.

4. The image decoding method according to claim 2, wherein the deriving of the linear model of the current block includes deriving a horizontal component parameter and a vertical component parameter of the linear model using the coordinate information of the reference sample and the value of the reference sample.

5. The image decoding method according to claim 4, wherein the deriving of the linear model of the current block includes setting the horizontal component parameter or the vertical component parameter to 0.

6. The image decoding method according to claim 4, wherein the deriving of the linear model of the current block includes applying a predetermined weight to the horizontal component parameter or the vertical component parameter.

7. The image decoding method according to claim 1, comprising obtaining a first flag indicating whether the linear model prediction is applied to the current block.

8. The image decoding method according to claim 7, comprising obtaining a second flag indicating whether directional linear model prediction is applied to the current block when the first flag indicates that the linear model prediction is applied to the current block.

9. The image decoding method according to claim 8, comprising obtaining a third flag indicating whether horizontal linear model prediction or vertical linear model prediction is applied to the current block when the second flag indicates that the directional linear model prediction is applied to the current block.

10. The image decoding method according to claim 1, comprising determining a linear model to be applied to the current block from among a plurality of linear models based on template matching.

11. An image encoding method comprising:

constructing a reference sample for linear model prediction of a current block based on reconstructed neighboring samples of the current block;
deriving a linear model of the current block based on the reference sample;
and
generating a prediction sample of the current block based on the linear model.

12. A computer-readable storage medium configured to store a bitstream generated by the image encoding method according to claim 11.

13. A method of transmitting data of image information, comprising:

constructing a reference sample for linear model prediction of a current block based on reconstructed neighboring samples of the current block;
deriving a linear model of the current block based on the reference sample;
generating a prediction sample of the current block based on the linear model;
generating a bitstream by encoding the current block based on the prediction sample; and
transmitting data including the bitstream.

FIG.1

| SOURCE DEVICE | | RECEIVING DEVICE |
|---|---|---|
| VIDEO SOURCE | | RENDERER |
| ENCODING APPARATUS | | DECODING APPARATUS |
| TRANSMITTER | → | RECEIVER |

FIG.2

FIG.3

FIG.4

```
┌─────────────────────────────────────┐
│    CONSTRUCT REFERENCE SAMPLE        │──S400
└─────────────────────────────────────┘
                 │
                 ▼
┌─────────────────────────────────────┐
│   DERIVE LINEAR MODEL PARAMETERS     │──S410
└─────────────────────────────────────┘
                 │
                 ▼
┌─────────────────────────────────────┐
│    GENERATE PREDICTION SAMPLES       │──S420
└─────────────────────────────────────┘
```

FIG.5

template    template reference region

template size

model reference region

coding block

FIG.6

template reference region &
template linear model reference region

template

template size

current block model reference region

coding block

FIG.7

template reference region &
model parameter derivation

template

template size

coding block

FIG.8

331

INTRA PREDICTOR

| REFERENCE SAMPLE CONSTRUCTOR | | LINEAR MODEL DERIVER | | PREDICTION SAMPLE GENERATOR |

800           810           820

FIG.9

```
┌─────────────────────────────────────┐
│   CONSTRUCT REFERENCE SAMPLE         │──S900
└─────────────────────────────────────┘
                  │
                  ▼
┌─────────────────────────────────────┐
│   DERIVE LINEAR MODEL PARAMETERS     │──S910
└─────────────────────────────────────┘
                  │
                  ▼
┌─────────────────────────────────────┐
│   GENERATE PREDICTION SAMPLES        │──S920
└─────────────────────────────────────┘
```

FIG.10

222

INTRA PREDICTOR

| REFERENCE SAMPLE CONSTRUCTOR | → | LINEAR MODEL DERIVER | → | PREDICTION SAMPLE GENERATOR |

1000 1010 1020

FIG.11

SMARTPHONE

CAMCORDER/CAMERA

ENCODING SERVER

WEB SERVER

STREAMING SERVER

WIRED/WIRELESS COMMUNICATION

WIRED/WIRELESS COMMUNICATION

MEDIA REPOSITORY

USER DEVICE

GAME CONSOLE

PC

SET-TOP BOX

SMARTPHONE

## INTERNATIONAL SEARCH REPORT

| International application No. |
|---|
| **PCT/KR2023/010774** |

| A. | CLASSIFICATION OF SUBJECT MATTER |
|---|---|

**H04N 19/593**(2014.01)i; **H04N 19/11**(2014.01)i; **H04N 19/176**(2014.01)i; **H04N 19/132**(2014.01)i; **H04N 19/186**(2014.01)i

According to International Patent Classification (IPC) or to both national classification and IPC

| B. | FIELDS SEARCHED |
|---|---|

Minimum documentation searched (classification system followed by classification symbols)

H04N 19/593(2014.01); H04N 19/103(2014.01); H04N 19/11(2014.01); H04N 19/136(2014.01); H04N 19/159(2014.01); H04N 19/176(2014.01); H04N 19/186(2014.01); H04N 19/59(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 선형 모델(linear model), 주변 블록(neighboring block), 복원 샘플(reconstructed sample), 예측 샘플(predicted sample), 인트라 예측 모드(intra prediction mode)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2021-122146 A (LG ELECTRONICS INC.) 26 August 2021 (2021-08-26)<br>See paragraphs [0006]-[0068]. | 1-13 |
| Y | WO 2018-236028 A1 (LG ELECTRONICS INC.) 27 December 2018 (2018-12-27)<br>See paragraphs [0007]-[0216]. | 1-13 |
| A | KR 10-2015-0060616 A (SAMSUNG ELECTRONICS CO., LTD.) 03 June 2015 (2015-06-03)<br>See paragraphs [0010]-[0091]. | 1-13 |
| A | KR 10-2015-0035935 A (SAMSUNG ELECTRONICS CO., LTD.) 07 April 2015 (2015-04-07)<br>See paragraphs [0008]-[0076]. | 1-13 |
| A | WO 2015-008417 A1 (NEC CORPORATION) 22 January 2015 (2015-01-22)<br>See paragraphs [0031]-[0077]. | 1-13 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 November 2023** | **03 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/010774**

| Patent document cited in search report | | | Publication date (day/month/year) | Patent family member(s) | | | Publication date (day/month/year) |
|---|---|---|---|---|---|---|---|
| JP | 2021-122146 | A | 26 August 2021 | KR | 10-2019-0042094 | A | 23 April 2019 |
| | | | | KR | 10-2022-0047682 | A | 18 April 2022 |
| | | | | KR | 10-2023-0125341 | A | 29 August 2023 |
| | | | | US | 2021-0136410 | A1 | 06 May 2021 |
| | | | | US | 2022-0417556 | A1 | 29 December 2022 |
| | | | | WO | 2018-070661 | A1 | 19 April 2018 |
| WO | 2018-236028 | A1 | 27 December 2018 | US | 11190762 | B2 | 30 November 2021 |
| | | | | US | 2020-0177878 | A1 | 04 June 2020 |
| KR | 10-2015-0060616 | A | 03 June 2015 | CN | 103392341 | A | 13 November 2013 |
| | | | | EP | 2645719 | A2 | 02 October 2013 |
| | | | | JP | 2014-500692 | A | 09 January 2014 |
| | | | | JP | 6046840 | B2 | 21 December 2016 |
| | | | | KR | 10-1763909 | B1 | 01 August 2017 |
| | | | | KR | 10-1995551 | B1 | 02 July 2019 |
| | | | | US | 11509899 | B2 | 22 November 2022 |
| | | | | US | 2021-0266554 | A1 | 26 August 2021 |
| | | | | WO | 2012-087077 | A2 | 28 June 2012 |
| | | | | WO | 2012-087077 | A3 | 07 September 2012 |
| KR | 10-2015-0035935 | A | 07 April 2015 | CN | 102934446 | B | 12 September 2017 |
| | | | | CN | 104780366 | B | 18 September 2018 |
| | | | | CN | 107426569 | A | 01 December 2017 |
| | | | | EP | 2545713 | A2 | 16 January 2013 |
| | | | | EP | 2545713 | B1 | 18 May 2016 |
| | | | | JP | 2015-180087 | A | 08 October 2015 |
| | | | | JP | 2015-180088 | A | 08 October 2015 |
| | | | | KR | 10-1671933 | B1 | 03 November 2016 |
| | | | | KR | 10-2015-0035932 | A | 07 April 2015 |
| | | | | KR | 10-2015-0035933 | A | 07 April 2015 |
| | | | | US | 2015-0124881 | A1 | 07 May 2015 |
| | | | | US | 8619858 | B2 | 31 December 2013 |
| | | | | WO | 2011-126275 | A2 | 13 October 2011 |
| | | | | WO | 2011-126275 | A3 | 26 January 2012 |
| WO | 2015-008417 | A1 | 22 January 2015 | JP | 6376130 | B2 | 22 August 2018 |
| | | | | US | 10178408 | B2 | 08 January 2019 |
| | | | | US | 2016-0142732 | A1 | 19 May 2016 |

Form PCT/ISA/210 (patent family annex) (July 2022)